Europäisches Patentamt

European Patent Office

Office européen des brevets

⑨

Veröffentlichungsnummer: **0 283 795**

**A2**

(12) **EUROPÄISCHE PATENTANMELDUNG**

(21) Anmeldenummer: 88103349.2

(22) Anmeldetag: 04.03.88

(51) Int. Cl.⁴ **G06F 3/16 , D06F 33/02**

(30) Priorität: 24.03.87 DE 3709670

(43) Veröffentlichungstag der Anmeldung:
28.09.88 Patentblatt 88/39

(84) Benannte Vertragsstaaten:
**DE FR GB IT**

(71) Anmelder: **Licentia Patent-Verwaltungs-GmbH**
**Theodor-Stern-Kai 1**
**D-6000 Frankfurt/Main 70(DE)**

(72) Erfinder: **Stamminger, Rainer, Dr. Dipl.-Phys.**
**Nordring 30**
**D-8560 Lauf(DE)**
Erfinder: **Wipperfürth, Franz-Josef, Ing. grad.**
**Egersdorfer Weg 9**
**D-8501 Cadolzburg(DE)**

(74) Vertreter: **Vogl, Leo, Dipl.-Ing.**
**Licentia Patent-Verwaltungs-G.m.b.H.**
**Theodor-Stern-Kai 1**
**D-6000 Frankfurt 70(DE)**

(54) **Haushaltsgerät mit einer Programmschalteinrichtung.**

㋟ Ein Haushaltsgerät ist mit einer Programmschalteinrichtung zur Steuerung auswählbarer unterschiedlicher Arbeitsprogramme ausgestattet. Um hierbei die Auswahl der Arbeitsprogramme zu erleichtern und manuelle Eingriffe überflüssig zu machen, erfolgt die Auswahl eines Arbeitsprogramms durch Erkennen und Auswerten eines vom Gerätebenutzer gesprochenen Codewortes. Hierzu ist ein Schallwandler (7) mit nachgeschaltetem Sprachanalysator (6) vorgesehen, dessen Analysignal über einen Prozessor (1) mit einzelnen Sprachmustersignalen eines Sprachmusterspeichers (8) verglichen werden. Den Speicherplätzen ist dabei jeweils ein Arbeitsprogramm zugeordnet, wie es einzelnen Tastschaltern (5) einer manuell betätigbaren Schalteinrichtung (4) zugeordnet ist. Der Prozessor (1) veranlaßt dann über eine damit im Dialog stehende Programmsteuerung (2) die programmgemäße Steuerung von elektrischen Einrichtungen (3) des Haushaltsgerätes.

Fig. 1

## Haushaltsgerät mit einer Programmschalteinrichtung

Die Erfindung betrifft ein Haushaltsgerät gemäß dem Oberbegriff des Anspruchs 1.

Es ist bei Haushaltsgeräten, wie Waschmaschinen, Geschirrspülmaschinen, Wäschetrocknern, Elektroherden oder dergleichen bekannt, eine Programmschalteinrichtung vorzusehen, mit welcher über eine manuell betätigbare Schalteinrichtung unterschiedliche Arbeitsprogramme ausgewählt und gesteuert werden können. Das Auswählen des richtigen, auf das zu behandelnde Gut abgestimmten Arbeitsprogrammes setzt sich dabei aus einer Mehrzahl von einzelnen Programmabschnitten zusammen, die gegebenenfalls einzeln manuell durch Betätigen von Tasten oder dergleichen Schalteinrichtungen auszuwählen sind. Dabei kann es leicht zu Fehlbedienungen führen, wenn versehentlich eine unzutreffende Schalteinrichtung betätigt wird. Schwierigkeiten ergeben sich insbesondere für Seh-und körperlich Behinderte.

Der Erfindung liegt die Aufgabe zugrunde, bei einem Haushaltsgerät gemäß dem Oberbegriff des Anspruchs 1 Maßnahmen zu treffen, durch welche ein Arbeitsprogramm auch ohne körperliche Berührung des Haushaltsgerätes ermöglicht wird.

Die Lösung dieser Aufgabe erfolgt gemäß der Erfindung durch die kennzeichnenden Merkmale des Anspruchs 1.

Für die Auswahl eines Arbeitsprogramms ist demnach eine phonetische Auswahl eines Arbeitsprogramms geschaffen, wobei die hierfür erforderliche Steuereinrichtung als Zusatzeinrichtung in einem elektronisch gesteuerten Haushaltsgerät realisiert werden kann. Der dort vorhandene Mikroprozessor kann dann gleichzeitig zur Auswertung von Codewörtern und ihrem Vergleich mit in einem Sprachmusterspeicher abgelegten Sprachmustern herangezogen werden. Wird dabei eine Übereinstimmung des Codewortes mit einem der für die einzelnen Arbeitsprogramme abgelegten Sprachmuster festgestellt, dann kann über den Prozessor der entsprechende Arbeitsablauf in der Programmschalteinrichtung ausgewählt und gesteuert werden. Wird eine Übereinstimmung zwischen dem phonetisch eingegebenem Codewort und einem abgespeicherten Sprachmuster nicht festgestellt, kann beispielsweise durch Betätigen einer dem gewünschten Arbeitsprogramm zugeordneten Taste das digitalisierte Codewort als Sprachmustersignal im zugeordneten Speicherplatz des Sprachmusterspeichers abgelegt werden, so daß dieses vom Benutzer frei wählbare Codewort für spätere Steuerungsvorgänge für den gewünschten Arbeitsprogrammablauf gespeichert ist. Hierdurch können fremdsprachliche oder Dialektausdrücke als Codewörter vom Benutzer frei gewählt werden. Es kann jedoch auch ein bei der Herstellung fest eingegebener Sprachmustersatz vorgegeben werden, der vom Benutzer beachtet werden muß. Sollen von Standardprogrammen abweichende Arbeitsprogramme möglich werden, dann können auch mehrere Codewörter miteinander verknüpft werden, die aufeinanderfolgend innerhalb eines bestimmten freigegebenen Eingabezeitraumes gesprochen werden müssen. Der Prozessor verknüpft dann diese speziellen Arbeitsprogrammabläufe und führt deren Steuerung über die angeschlossenen Steuereinrichtung aus. Im übrigen kann die phonetisch getroffene Auswahl des Arbeitsprogrammes optisch oder akustisch bestätigt werden, in dem beispielsweise in einem Anzeigendisplay Leuchten an Plätzen eingeschaltet werden, die dem gewählten Arbeitsprogramm entsprechen bzw. können über Lautsprecher Begriffe wie "Verstanden" oder das ausgewählte Arbeitsprogramm im Klartext wiederholt werden. Diese Ausgabe kann auch dann erfolgen, wenn die Auswahl des Arbeitsprogramms durch Betätigen einer entsprechenden manuellen Schalteinrichtung erfolgt ist.

Die Erfindung ist nachfolgend anhand von Prinzipdarstellungen näher erläutert.

Es zeigt:

Figur 1: Eine Prinzipskizze einer Programmschalteinrichtung für ein Haushaltsgerät.

Figur 2: Ein Grundprogrammablaufschema für eine phonetische Auswahl eines Arbeitsprogramms.

Figur 3: Ein Ergänzungs-Programmablaufschema zur Identifikation von bereits mit einem Codewort belegten Tastschalteinrichtungen.

Figur 4: Ein Ergänzungs-Programmablaufschema zur Feststellung, ob freier Speicherplatz vorhanden ist und

Figur 5: Ein Ergänzungs-Programmablaufschema zur Auswahl von nicht benötigten Codewörtern.

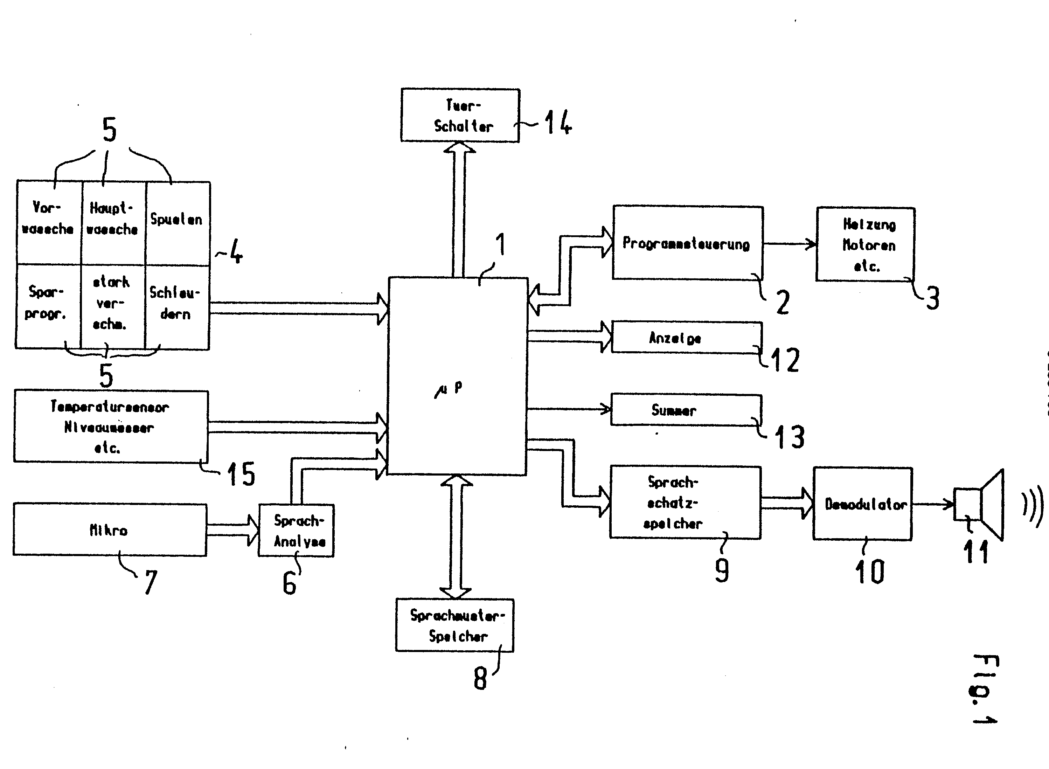

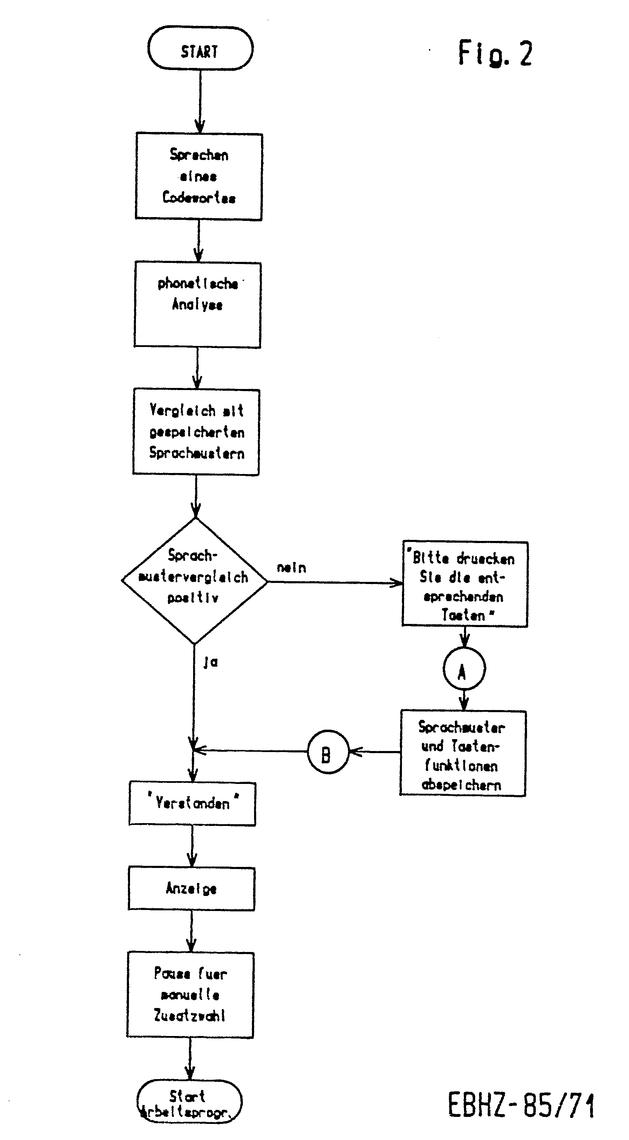

Eine Programmsteuereinrichtung gemäß den Figuren 1 und 2 für ein Haushaltsgerät weist einen Prozessor(1), insbesondere einen Mikroprozessor auf, der im Dialog mit einer Programmsteuerung (2), insbesondere einem mechanischen Schaltwerk mit oder ohne Mikroprozessor oder nur einem weiteren Mikroprozessor für die Durchführung einer Mehrzahl von Arbeitsprogrammen steht. Die Programmsteuerung gibt ihre Ausgangssteuersignale an die für die Durchführung des jeweiligen Arbeitsprogramms im Haushaltsgerät vorgesehenen Einrichtung (3), wie Heizelemente, Motoren, Ventile, Ventilatoren oder dergleichen dem gewünschten Ablauf entsprechend weiter. Die Auswahl der Arbeitsprogramme kann dabei mittels einer manuell zu betätigenden Schalteinrichtung (4) erfolgen, die vorliegend aus einer Mehrzahl von einzelnen Tastschaltern (5) aufgebaut ist. Die Schalteinrichtung (4) steht mit dem Prozessor (1) in elektrischer Verbindung, wobei den einzelnen Tastschaltern oder deren Kombination (5) Arbeitsprogramme zugeordnet sind. Bei der Steuerung für eine Waschmaschine kann einem Tastschalter (5) beispielsweise das Arbeitsprogramm "Vorwaschen", einem weiteren Tastschalter (5) das Arbeitsprogramm "Hauptwäsche" und den weiteren Tastschaltern (5) z. B. die in Figur 1 den Tastschaltern (5) zugeschriebenen Arbeitsprogramme zugeordnet sein. Bei der Betätigung eines oder mehrerer des Tastschalter (5) veranlaßt dann der Prozessor (1) die Programmsteuerung (2) zur Abarbeitung der ausgewählten einzelnen Arbeitsprogramme, soweit deren Verknüpfung sinnvoll ist.

Daneben ist an den Prozessor (1) ein Sprachanalysator (6) angeschlossen, der von einem Schallwandler (7), insbesondere einem Mikrophon gesteuert wird. Zusätzlich steht mit dem Prozessor (1) ein Sprachmusterspeicher (8) im Dialog, der entweder fest vorgegebene Sprachmustersignale enthält oder dessen Speicherplätze frei mit Sprachmustersignalen belegt werden können. Wird hierbei nac dem Start der Programmschalteinrichtung keiner der Tastschalter (5) betätigt, sondern innerhalb einer Zeitdauer von z. B. 10 Sekunden ein Codewort in den Schallwandler (7) gesprochen, dann wird dieses Codewort im Sprachanalysator (6) in ein Analysesignal umgewandelt, das der Prozessor (1) durch interne Steuerungsabläufe auf Übereinstimmung mit den einzelnen im Sprachmusterspeicher (8) abgelegten Sprachmustersignalen vergleicht. Da die einzelnen Speicherplätze des Sprachmusterspeichers (8) den Funktionen zugeordnet sind, wie sie einzelnen Tastschaltern (5) beigegeben sind, wird bei Übereinstimmung zwischen dem Analysesignal des Codewortes und einem Sprachmustersignal in einem Speicherplatz die Programmsteuerung (2) über den Prozessor (1) zur Abarbeitung des entsprechenden Arbeitsprogramms veranlaßt. Es können also über die phonetische Eingabe die gleichen Arbeitsprogramme aufgerufen werden, wie sie durch manuelles Betätigen der Tastschalter (5) gesteuert werden können. Es wird somit die Auswahl eines Arbeitsprogramms durch Erkennung und Auswertung eines vom Gerätebenutzer gesprochenen Codewortes in der Programmschalteinrichtung vorgenommen.

Sind fest vorgegebene Sprachmuster im Sprachmusterspeicher (8) abgelegt, dann muß die Eingabe über den Schallwandler (7) gegebenenfalls solange wiederholt werden, bis das vorgegebene Sprachmuster mit dem des Codewortes übereinstimmt. Um jedoch Fremdsprachen oder Dialekte berücksichtigen zu können, die der jeweilige Benutzer des Haushaltsgerätes spricht, kann für die Sprachmustersignale ein wahlfreier Speicher (RAM) verwendet werden. Durch Eingabe eines Codewortes über den Schallwandler (7) und Betätigen eines Tastschalters (5) wird dann in einer diesem Tastschalter (5) zugeordneten Speicherstelle des Sprachmusterspeichers (8) das vom Sprachanalysator (6) erzeugte, dem Codewort entsprechende Analysesignal abgelegt. In gleicher Weise können auch die weiteren Speicherplätze im Sprachmusterspeicher (8) belegt werden, wenn der entsprechende Tastenschalter (5) betätigt und ein zugehöriges Codewort eingegeben wird. Durch Eingabe des jeweils gewählten Codewortes über den Schallwandler (7) kann dann nach dem Start der Programmschalteinrichtung die Programmsteuerung (2) in Gang gesetzt werden. Ein Speicher mit wahlfreiem Zugriff macht es dabei auch möglich, daß bei einer beabsichtigten oder unbeabsichtigten Änderung des Codewortes dieses neue Codewort dem jeweiligen ausgewählten Arbeitsprogramm durch Betätigen des zugehörigen Tastschalters neu zugeordnet wird.

An den Prozessor (1) kann ferner ein Sprachschatzspeicher (9) angeschlossen sein, der nach erfolgter Auswahl des Arbeitsprogrammes über einen Demodulator (10) und einen Lautsprecher (11) ein akustisches Quittungssignal abgibt. Dieses Quittungssignal kann durch den Begriff "Verstanden" oder die akustische bzw. optische Wiederholung des oder der gewählten Arbeitsprogramme gebildet sein.

Die manuell oder phonetisch ausgewählten Arbeitsprogramme werden zusätzlich in einer optischen Anzeige (12) dauerhaft dargestellt, um jederzeit eine Überprüfung des gewählten Programmablaufs zu ermöglichen. Dabei ist die Anzeige (12) vom Prozessor (1) gesteuert. Anschließend wird die Eingabemöglichkeit noch für eine Zeit von beispielsweise 5 Sekunden offengehalten, damit vorzugsweise manuell eine Zusatzwahl oder Korrektur des oder der eingegebenen Arbeitsprogramme ausgeführt werden kann. Erst danach wird der ausgewählte Arbeitsprogrammablauf über die Programmsteuerung (2) gestartet.

Wenn dem phonetisch eingegebenen Codewort keines der Sprachmustersignale im Sprachmusterspeicher (8) entspricht, wird in der Anzeige (12) oder über die akustische Ausgabeeinrichtung (9 bis 11) beispielsweise die Aufforderung ausgegeben "Bitte drücken Sie den Tastschalter für das gewünschte Arbeitsprogramm". Mit dem Drücken dieser Taste wird dann das Analysesignal an dem diesem Tastenschalter (5) zugeordneten Speicherplatz im Sprachmusterspeicher (8) abgelegt. Danach kommt beispielsweie die oben angegebene Quittierung "Verstanden", die Anzeige, die Wartezeit für die Änderung oder zusätzliche Auswahl von Auswahl von Arbeitsprogrammen sowie der Start für die Programmsteuerung (2).

An den Prozessor (1) kann auch ein Summer (13) angeschaltet werden, der nach Abarbeitung des oder der gewählten Arbeitsprogramme beispielsweise einen Dauerton abgibt. Der Prozessor (1) kann aber auch Steuersignale von zusätzlichen Schaltern des Haushaltsgeräts, beispielsweise einer Türschalters (14) erhalten, der bei geöffneter Tür eine Signalgabe an dem Anzeigendisplay (12), dem Summer (13) oder der akustischen Ausgabeeinrichtung (9 bis 11) bewirkt. Über die akustische Ausgabeeinrichtung (9 bis 11) kann dabei beispielsweise der Fehlerhinweis ausgegeben werden "Schließen Sie bitt noch die Tür".

Im übrigen nimmt der Prozessor (1) auch Steuersignale von Sensoren (15) auf, die beispielsweise Betriebstemperaturen, Niveaus oder sonstige während des Programmablaufs sich ändernde Parameter oder Istwerte abgegeben.

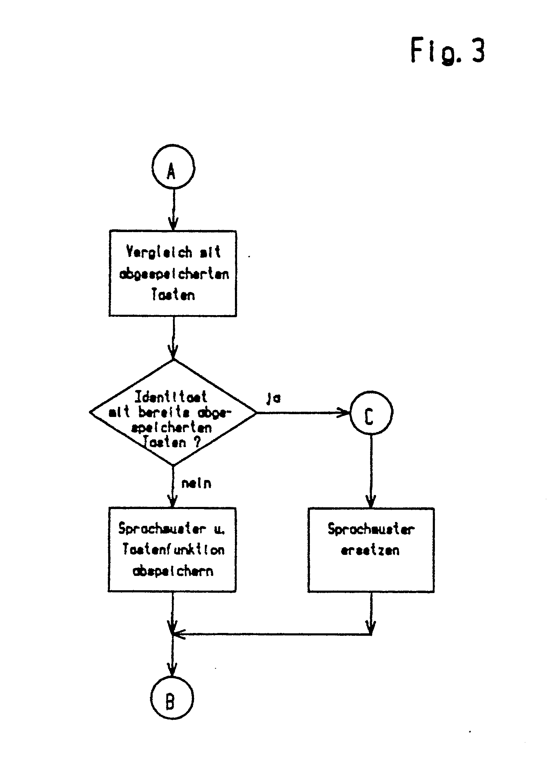

Im Programmablaufschema der Figur 2 ist zwischen Trennpunkten A und B ein Programmablaufschritt vorgesehen, in dem das neu eingegebene Sprachmustersignal und die hierzu betätigte Taste mit ihrer Funktion abgespeichert werden, bevor die akustische oder optische Anzeige "Verstanden" erfolgt. Diesem Programmablaufschritt war der Vergleich des eingegebenen Sprhachmustersignals mit den bereits abgespeicherten Sprachmustern mit negativer Entscheidung und dem Hinweis an den Benutzer vorausgegangen, den Tastenschalter (5) zu betätigen, dem das eingegebene Codewort zugeordnet sein soll. Um dabei die Steuerung über die Spracheingabe komfortabler gestalten zu können, kann zwischen den Trennpunkten A und B eine Erweiterung des Programmblaufschemas gemäß Figur 3 vorgesehen werden. Demnach wird nach dem Hinweis, den Tastschalter (5) zu bedienen, welchem das neueingegebene Codewort zugeordnet sein soll, ein erneuter Vergleichsvorgang eingeführt, bei dem ein Vergleich mit abgespeicherten Tasten erfolgt. Hierdurch wird die Frage beantwortet, ob der gerade betätigten Taste oder auch einer betätigten Tastenkombination überhaupt schon ein Sprachmuster zugeordnet war. Ist demnach keinem Tastenschalter (5) oder einer Kombination von mehreren Tastenschaltern (5) ein Sprachmuster zugeordnet, dann wird dieses Sprachmustersignal und die zugehörige Tastenfunktion wie nach Figur 2 abgespeichert. Wird in dem Vergleich jedoch festgestellt, daß der oder den Tastenschaltern (5) bereits ein Sprachmustersignal zugeordnet war, dann wird lediglich dieses Sprachmuster im Sprachmusterspeicher ersetzt und an den Trennpunkt B weitergesprungen.

Der Sprachmusterspeicher (8) hat eine über die Zahl von Tasten (5) hinausgehende Anzahl von n-Speicherplätzen. Bei jeder Neueingabe über eine oder mehrere Tasten (4, 5) ist es dabei möglich, den nächsten freien Speicherplatz du belegen. Ist der Speicher jedoch bereits voll, dann kann bei der Aufforderung zur Speicherung des neueingegebenen Codewortes der zuerst belegte oder älteste Speicherplatz gelöscht und mit dem neuen Codewort belegt werden. Es können aber auch einem Tastenschalter (5) eine bestimmte Zahl von Speicherplätzen fest zugeordnet werden. Bei der Eingabe eines neuen Sprachmustersignals wird auch hier zweckmäßig der zuerst belegte Speicherplatz neu belegt, wenn die dieser Taste zugeordneten Speicherplätze alle belegt waren. Können einem Tastenschalter mehrere Sprachmustersignale zugeordnet werden, dann ist es möglich, daß die Bedienung der phonetischen Steuereinrichtung von Personen vorgenommen werden kann, die unterschiedliche Begriffe für die einzelnen Teile der Arbeitsprogramme benutzen oder eine unterschiedliche Aussprache haben.

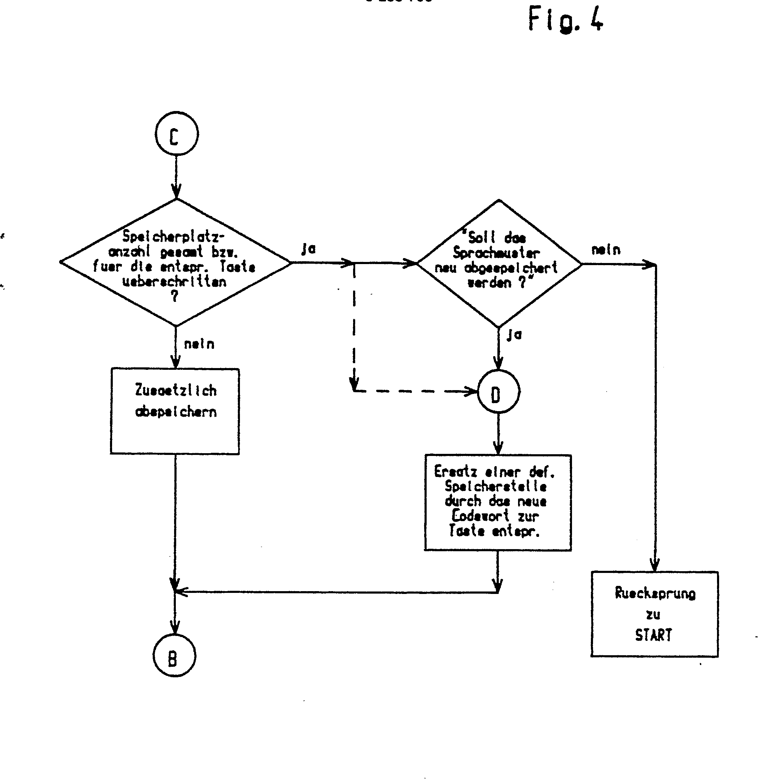

Um eine zweckmäßige Organisation eines so ausgebauten Sprachmusterspeichers (8) zu erreichen, wird in Figur 3 der Programmablaufschritt zwischen den Trennpunkte C und B entsprechend Figur 4 ersetzt. Ist demnach im vorausgegangenen Identitätsvergleich der abgespeicherten Tasten eine positive Entscheidung gefallen, dann wird zunächst abgefragt, ob die Anzahl der bereits belegten Speicherplätze, die insgesamt vorgesehen sind oder einem einzelnen Tastschalter (4) zugeordnet sind, erreicht ist. Ist das nicht der Fall, wird das neu eingegebene Codewort in einer der freien Speicherstelle abgespeichert und es erfolgt der Sprung zum Trennpunkt B. Sind dagegen die Speicherplätze belegt, dann wird beispielsweise durch die akustische Ausgabeeinrichtung (9 - 11) der Benutzer gefragt, ob dieses neue Sprachmuster abgespeichert werden soll. Wird diese Entscheidung mit Ja beantwortet, wird eine der Speicherstellen mit dem neuen Codewort überschrieben und der entsprechenden Taste zugeordnet. Der Programmablauf springt dann wieder zum Trennpunkt B weiter. Will der Benutzer dagegen das neue Codewort nicht abgespeichert haben, und entscheidet er mit Nein, dann erfolgt ein Rücksprung zum Start, wo der Benutzer zur Eingabe eines weiteren Codewortes aufgefordert wird. Die Frage an den Benutzer, ob das neu eingegebene Codewort abgespeichert werden soll, kann auch entfallen, wenn festgelegt wird, daß in diesem Falle automatisch der Inhalt einer Speicherstelle durch das neue Sprachmustersigal ersetzt werden soll. In diesem Falle wird nach der Feststellung, daß kein freier Speicherplatz mehr vorhanden ist, demäß der gestrichelten Linie in Figur 4 sofort an die Trennstelle D gesprungen, nach welcher das automatische Überschreiben ausgeführt wird.

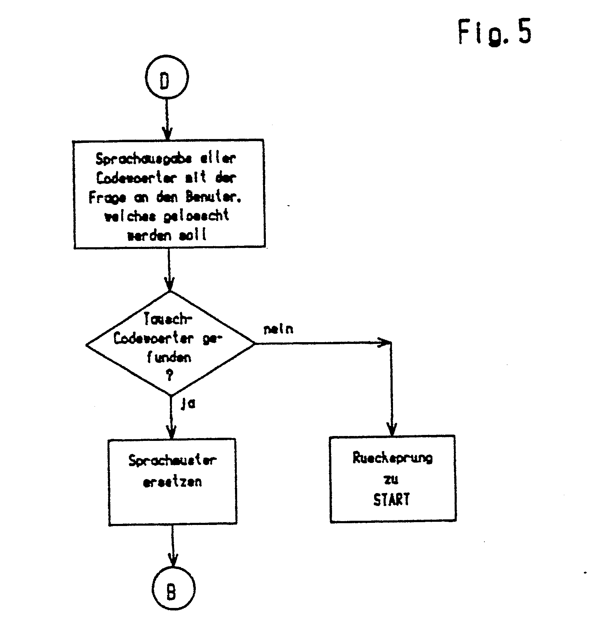

Dabei kann dem Benutzer aber auch die Möglichkeit eingeräumt werden, ein bestimmtes der abgespeicherten Codewörter zu löschen. Hierzu wird der Programmablaufschritt zwischen den Trennpunkten D und B in Figur 4 ersetzt durch Programmablaufschritte gemäß Figur 5. Demnach werden die Codewörter aller einer Taste zugeordneten Speicherstellen über die Ausgabeeinrichtung (9 - 11 ) nacheinander ausgegeben. Ist das zu tauschende Codewort gefunden, wird das Sprachmuster in der entsprechenden Speicherzelle ersetzt und an den Trennpunkt B gesprungen. Wird kein Codewort für entbehrlich erachtet, dann erfolgt ein Rücksprung zum Start, wobei sich dann der Benutzer eines Codewortes bedienen kann, das ihm gerade ausgegeben worden ist. Er kann jedoch auch ein neues Codewort eingeben und an die Stelle eines anderen Codewortes setzen.

## Ansprüche

1. Phonetische Steuereinrichtung, insbesondere für Haushaltsgeräte, wie Waschmaschine, Geschirrspülmaschine, Trockner, Elektroherd oder dergleichen, mit einer Programmschalteinrichtung zur Steuerung auswählbarer unterschiedlicher Arbeitsprogramme, dadurch gekennzeichnet, daß die Auswahl eines Arbeitsprogrammes durch Erkennung und Auswertung eines vom Gerätebenutzer gesprochenen Codewortes erfolgt.

2. Steuereinrichtung nach Anspruch 1, dadurch gekennzeichnet, daß das Codewort einem Sprachanalysator (6) zugeführt wird, dessen Analysesignal mit in einem Sprachmusterspeicher (8) abgelegten Sprachmustersignalen verglichen wird, und daß bei gegebener Übereinstimmung mit einem der Sprachmustersignale direkt ein dem Codewort zugeordnetes Arbeitsprogramm gestartet wird.

3. Steuereinrichtung nach Anspruch 2, dadurch gekennzeichnet, daß bei fehlender Übereinstimmung zwischen dem Analysesignal und dem Sprachmustersignal eine je einem vorgegebenen Arbeitsprogramm zugeordnete Schalteinrichtung (4, 5) manuell betätigt wird, welcher ein Speicherplatz im Sprachmusterspeicher (8) zugeordnet ist, daß der Speicherplatz mit dem Analysesignal des Codewortes als Sprachmustersignal belegt wird und daß das dieser Schalteinrichtung (4, 5) bzw. dem Speicherplatz zugeordnete Arbeitsprogramm gestartet wird.

4. Steuereinrichtung nach Anspruch 1 oder einem der folgenden, dadurch gekennzeichnet, daß bei fehlender Übereinstimmung des Analysesignals mit einem der gespeicherten Sprachmustersignale und bei funktionaler Identität der manuell betätigten Schalteinrichtung mit der Funktion einer bereits gespeicherten Schalteinrichtung, das betreffende Sprachmustersignal durch das Analysesignal ersetzt wird.

5. Steuereinrichtung nach Anspruch 1 oder einem der folgenden, dadurch gekennzeichnet, daß eine Überschreibung eines bereits belegten Speicherplatzes durch Betätigen der Schalteinrichtung zu quittieren ist.

6. Steuereinrichtung nach Anspruch 1 oder einem der folgenden, dadurch gekennzeichnet, daß das Ersetzen eines abgespeicherten Analysesignals nur erfolgt, wenn entweder die Gesamtspeichermöglichkeit oder die der jeweils betätigten Schalteinrichtung zugeordneten Speicherplatzmöglichkeiten überschritten ist oder wird.

7. Steuereinrichtung nach Anspruch 1 oder einem der folgenden, dadurch gekennzeichnet, daß die Schalteinrichtung (4) aus einer einfachen Taste oder einer Mehrfach-Tastatur (5) besteht, wobei jeder Taste (5) ein Arbeitsprogramm zugeordnet ist und/oder dieses durch eine Tastenkombination bestimmt wird.

8. Steuereinrichtung nach Anspruch 1 oder einem der folgenden, dadurch gekennzeichnet, daß ein Schallwandler (7) ein dem Codewort entsprechendes Signal an einen phonetischen Analysator (6) liefert, der ein digitales Analysesignal an einen Prozessor (1) abgibt, an welchen die Tasten (5) der Schalteinrichtung (4) sowie ein Sprachmusterspeicher (8) und eine Programmsteuerung (2) angeschlossen sind.

9. Steuereinrichtung nach Anspruch 8, dadurch gekennzeichnet, daß an den Prozessor (1) ein Sprachschatzspeicher (9) mit nachgeschaltetem Demodulator (10) und Lautsprecher (11) angeschlossen ist und daß bei Übereinstimmung des eingegebenen Codewortes mit einem abgespeicherten Sprachmuster eines Speicherplatzes oder bei Neueingabe eines Codewortes anschließend eine akustische Ausgabe gesteuert wird.

10. Steuereinrichtung nach Anspruch 8 oder 9, dadurch gekennzeichnet, daß ein vom Prozessor (1) gesteuertes Anzeigendisplay (12) vorgesehen ist und daß der Prozessor (1) nach der Wahl eines Arbeitsprogramms ein entsprechendes Anzeigesignal auf das Anzeigendisplay (12) schaltet.

11. Steuereinrichtung nach Anspruch 1 oder einem der folgenden, dadurch gekennzeichnet, daß die Codewörter während des Produktionsprozesses oder bei Installation des Haushaltsgerätes fest vorgegeben werden.

12. Steuereinrichtung nach Anspruch 1 oder einem der folgenden, dadurch gekennzeichnet, daß die Codewörter vom Benutzer frei wählbar sind.

13. Steuereinrichtung nach Anspruch 1 oder einem der folgenden, dadurch gekennzeichnet, daß mehrere Codewörter miteinander verknüpfbar sind.

14. Steuereinrichtung nach Anspruch 1 oder einem der folgenden, dadurch gekennzeichnet, daß die Sprachmustersignale der gespeicherten Codewörter und ihre Bedeutung durch neue ersetzbar sind.

15. Steuereinrichtung nach Anspruch 1 oder einem der folgenden, dadurch gekennzeichnet, daß alternativ oder zusätzlich zur phonetischen Programmwahl eine manuelle Programmwahl möglich ist.

16. Steuereinrichtung nach einem der vorhergehenden Ansprüche, dadurch gekennzeichnet, daß die der phonetischen Programmwahl entsprechenden Programme optisch oder akustisch bestätigt werden.

Fig. 1

**Fig. 2**

START

Sprechen
eines
Codewortes

phonetische
Analyse

Vergleich mit
gespeicherten
Sprachmustern

Sprachmustervergleich
positiv

nein → "Bitte druecken
Sie die entsprechenden
Tasten"

↓

(A)

↓

Sprachmuster
und Tastenfunktionen
abspeichern

(B)

Ja

"Verstanden"

Anzeige

Pause fuer
manuelle
Zusatzwahl

Start
Arbeitsprogr.

EBHZ-85/71

Fig. 3

A

Vergleich mit
abgespeicherten
Tasten

Identitaet
mit bereits abgespeicherten
Tasten ?

ja → C

nein

Sprachmuster u.
Tastenfunktion
abspeichern

Sprachmuster
ersetzen

B

# Fig. 4

C

Speicherplatzanzahl gesamt bzw.
fuer die entspr. Taste
ueberschritten
?

Ja

"Soll das
Sprachmuster
neu abgespeichert
werden ?"

nein

nein

Ja

Zusaetzlich
abspeichern

D

Ersatz einer def.
Speicherstelle
durch das neue
Codewort zur
Taste entspr.

R?cksprung
zu
START

B

EBHZ-85/71

Fig. 5